# EUROPEAN PATENT SPECIFICATION

(11) **EP 2 980 181 B1**
(45) Date of publication and mention of the grant of the patent: **15.01.2020**
(21) Application number: 14772589.9
(22) Date of filing: 28.03.2014
(51) Int. Cl.: F16D 13/60, F16D 69/02

(54) **FRICTION MATERIAL**
REIBUNGSMATERIAL
MATÉRIAU DE FROTTEMENT

(30) Priority: 29.03.2013 JP 2013073500
(43) Date of publication of application: 03.02.2016
(73) Proprietor: Akebono Brake Industry Co., Ltd., Tokyo 103-8534 (JP)
(72) Inventor: TAKADA, Takuya, Tokyo 103-8534 (JP); SEKI, Katsuji, Tokyo 103-8534 (JP); SUGAI, Yoshiyuki, Tokyo 103-8534 (JP); YASUNO, Tomomi, Tokyo 103-8534 (JP)
(74) Representative: Grünecker Patent- und Rechtsanwälte PartG mbB
(86) International application number: PCT/JP2014/059114
(87) International publication number: WO 2014/157616

(56) References cited:
- WO-A1-2011/131227
- WO-A1-2012/022027
- CN-A- 101 354 068
- CN-A- 101 555 915
- CN-A- 101 768 323
- JP-A- 2012 052 069

## Description

### Technical Field

The present invention relates to a friction material, particularly to a friction material to be used for a brake pad, a brake lining, a clutch and the like for automobiles, railway vehicles, industrial machines and the like.

### Background Art

A friction material to be used for a brake, such as a disk brake and a drum brake, and a clutch or the like is composed of raw materials, such as a fiber base material for exerting a reinforcing function, a friction adjusting material for imparting a friction operation and adjusting friction performance thereof, and a binder for integrating the components.

With recent advancements in the high performance and high speed capabilities of vehicles, the role of the brakes has become increasingly severe, and it has become necessary to have a sufficiently high coefficient (effectiveness) of friction. Furthermore, since the temperature becomes higher when braking is performed at a high speed, a friction state in this case is different from the case where braking is performed at a low temperature and a low speed, a change in coefficient of friction due to the change in temperature is small, and stable friction properties are required.

Currently, it is conventional that a general friction material containing an appropriate amount of metal fibers is effective in reinforcing the strength of the friction material or stabilizing the coefficient of friction, in maintaining the coefficient of friction or improving efficiency of heat radiation at a high temperature, and in improving wear resistance. Patent Document 1 which focuses on the properties of the metal fibers discloses a friction material containing steel fibers in an amount of 5% by mass to 10% by mass, copper fibers having an average fiber length of 2 mm to 3 mm in an amount of 5% by mass to 10% by mass, and zinc powder having a particle diameter of 5 µm to 75 µm in an amount of 2% by mass to 5% by mass.

According to Patent Document 1, when the friction material contains copper fibers within a range of a predetermined amount, it is possible to improve the coefficient of friction at a low temperature, and to control deterioration of the coefficient of friction at a high temperature and a high speed. In this mechanism, during the friction between the friction material and a counterpart material (disk rotor), an adhesion film is formed on a surface of the counterpart material due to the malleability of the metal contained in the friction material, and the film acts as a protective film, and thus, they largely contribute to the stabilization of the coefficient of friction at a low temperature and the maintenance of a high coefficient of friction at a high temperature.

However, there is a case where a metal component contained in wear powder of the disk rotor or in the friction material of a brake pad is bitten into the friction material, and an aggregated large metal ingot is made, and the aggregated large metal ingot remains between the brake pad and the disk rotor. There is a possibility that the metal ingot aggregated in this manner leads to abnormal wear of the disk rotor (Patent Document 2).

Currently, the metal component contained in the friction material is mainly metal fibers, such as steel fibers or copper fibers in many cases, and when a large amount of metal fibers are contained, there is a concern that the above-described abnormal wear of the disk rotor is caused.

In addition, since a copper component contained in the friction material is discharged as the wear powder by performing the braking, an influence on the natural environment is pointed out. In Patent Document 3, a method of controlling elution of the copper component in the friction material is disclosed.

Meanwhile, in a general friction material, it is conventional that fluid lubrication acts on the surface of the friction material when water is interposed, the coefficient of friction is decreased, and effectiveness of the brake is also decreased. Even in a case of the friction material containing the copper component in the related art, since a large amount of moisture is adsorbed by a friction surface in a wet state, there is a possibility that a change in the coefficient of friction during initial braking becomes large.

In Patent Document 4, an effect of cutting a water film by adding silicon carbide as an inorganic binder into the friction material is disclosed. In Patent Document 5, a method of surface treatment by using a silane-based water-repellent material is disclosed. In addition, in Patent Document 6, a method for alleviating the influence of water by chamfering the shape of a disk brake pad is disclosed. Furthermore, in Patent Document 7, a method for wholly improving friction properties by adding an Fe-Mo intermetallic compound and copper oxide is disclosed.

CN101555915A and WO2012/022027A1 also disclose friction materials.

### Citation List

### Patent Documents

[Patent Document 1] JP-A-2010-77341
[Patent Document 2] JP-A-2007-218395
[Patent Document 3] JP-A-2010-285558
[Patent Document 4] JP-A-3-577688
[Patent Document 5] JP-A-2000-053945
[Patent Document 6] JP-A-10-9311
[Patent Document 7] JP-T-2008-509232 (the term "JP-T" used herein means a published Japanese translation of a PCT patent application)

### Summary of Invention

### Technical Problem

As described above, in order to reduce the amount of abnormal wear of a counterpart material (disk rotor) and the environmental load, a friction material which does not contain a copper component, a friction material which controls elution of the copper component or the like has been investigated in various manners. However, in the friction material which does not contain the copper component, since an adhesion film is not formed by the copper component, a change in the coefficient of friction in a wet state becomes larger as compared to a friction material containing the copper component, and there is a concern that a stabilized coefficient of friction cannot be obtained. For this reason, in a wet state, it is difficult to obtain the friction properties which are equivalent to that of the friction material containing the copper component in the related art, and there is room for improvement in the performance of the friction material.

Therefore, an object of the present invention is to provide a friction material which contains steel fibers which are metal fibers, and does not contain a copper component, has stabilized friction properties in a wet state, and has small counterpart material attack.

### Solution to Problem

The present inventors have found that the problem of a sudden change in the coefficient of friction in a wet state or an increase of the counterpart material attack, which is caused when the friction material containing a binder, a friction adjusting material, and a fiber base material does not contain a copper component, can be solved in a balanced manner by the combination use of alumina, chromite, at least any one of aluminum and an Fe-Al intermetallic compound, and steel fibers, and thus, the present invention has been achieved.

In addition, in the description, the expression "does not contain a copper component" means that any of copper fibers, copper powder, an alloy (brass or bronze) and compound, which contain copper, is not mixed as a raw material of the friction material.

That is, the present invention solves the above problems, and includes the embodiments as defined in the claims.

### Advantageous Effects of Invention

According to the present invention, it is possible to obtain a friction material which has stabilized friction properties in a wet state and has small counterpart material attack by containing: at least any one of aluminum and an Fe-Al intermetallic compound; alumina; chromite; and steel fibers, even when the copper component is not contained. Description of Embodiments

The friction material in the present invention is a friction material which contains a binder, a friction adjusting material, and a fiber base material, and does not contain a copper component, and which contains: at least any one of aluminum and an Fe-Al intermetallic compound; alumina; chromite; and steel fibers.

In addition, it is preferable that the friction material in the present invention further contains a filler such as an organic filler or an inorganic filler, an abrasive, a metal other than the copper component and the like, as the friction adjusting material, and the friction material may contain organic fibers or inorganic fibers which are generally used in addition to the steel fibers as the fiber base material. In addition, it is preferable to contain, as necessary, a binder such as a thermosetting resin, which integrates the components.

Here, "% by weight" and "% by mass" are same in meaning.

### (Alumina and Chromite)

In the present invention, alumina and chromite are mainly used as the abrasive.

The alumina in the present invention represents α-alumina (α-Al₂O₃) such as mono crystal corundum or polycrystalline corundum.

A particle diameter d50 of alumina is not particularly limited as long as the particle diameter is a size which is normally used, but is preferably from 0.5 µm to 50 µm, and more preferably from 1.0 µm to 10 µm, as a secondary particle. When the particle diameter is within the range, a counterpart material is appropriately grinded without an excess or deficiency. According to this, the coefficient of friction in a wet state can be stabilized, and suitable counterpart material attack can also be obtained.

The particle diameter d50 in the description represents a value of 50% of the particle diameter of a cumulative distribution curved line, that is, a particle diameter d50 which has a weight percentage of 50%, and can be determined by a laser diffraction particle diameter distribution method. In addition, the abrasive will be described in detail later, but mild abrasives are obtained as the particle diameter decreases, and strong abrasives are obtained as the particle diameter increases.

A content of alumina varies depending on the particle diameter of alumina, but in general, the content is preferably from 0.5% by mass to 10% by mass, and more preferably from 1% by mass to 8% by mass in the friction material. When the content is within the range, the coefficient of friction in a wet state can be stabilized by appropriately grinding the counterpart material, and in addition, suitable counterpart material attack can be obtained without excessively grinding the counterpart material.

The chromite in the present invention is FeCr₂O₄ or a material in which a part or all of Fe in FeCr₂O₄ is substituted with Mg, and/or a material in which a part or all of Cr in FeCr₂O₄ is substituted with Al or Fe³⁺, and represents chrome iron ore such as (Fe, Mg)O·(Cr, Al)₂O₃.

A particle diameter d50 of chromite is not particularly limited as long as the particle diameter is a size which is normally used, but is preferably from 0.5 µm to 50 µm, and more preferably from 1.0 µm to 20 µm. When the particle diameter is within the range, the coefficient of friction in a wet state can be stabilized by appropriately grinding the counterpart material, and in addition, suitable counterpart material attack can be obtained without excessively grinding the counterpart material.

A content of chromite varies depending on the particle diameter of chromite, but in general, the content is preferably from 1% by mass to 15% by mass, and more preferably from 2% by mass to 10% by mass in the friction material. When the content is within the range, the coefficient of friction in a wet state can be stabilized by appropriately grinding the counterpart material, and in addition, suitable counterpart material attack can be obtained without excessively grinding the counterpart material.

### (Aluminum and Fe-Al Intermetallic Compound)

The aluminum in the present invention is used as a fiber substance or a particle substance.

A shape of the aluminum is not particularly limited, but at least any one of aluminum powder and aluminum fibers is preferable from the viewpoint of dispersibility in a raw material mixture.

When the aluminum is an aluminum powder, the particle diameter d50 is not particularly limited as long as the particle diameter is a size which is normally used, but is preferably from 5 µm to 500 µm from the viewpoint of prevention of excessive wear of the counterpart material and film-forming property on a friction surface.

In a case of aluminum fibers, the shape preferably has a fiber diameter of 20 µm to 500 µm, a length of 0.1 mm to 5 mm, and an aspect ratio of 3 or more from the viewpoint of film-forming property and prevention of separation from the raw material mixture.

Regardless of the shape, such as a powder shape or a fiber shape, a content of aluminum is preferably from 0.1% by mass to 10% by mass, and more preferably from 0.5% by mass to 5% by mass in the friction material. The content which is within the range is preferable from the viewpoint of reduction of the counterpart material attack and stabilization of the friction properties.

The friction material in the present invention can contain the Fe-Al intermetallic compound instead of the aluminum, or in addition to the aluminum.

Instead of the copper component, the Fe-Al intermetallic compound is preferably used since an adhesion film can be formed on a surface of the counterpart material. The Fe-Al intermetallic compound is preferable since it is possible to obtain an alloy having a melting point which is close to that of copper by appropriately selecting and combining the Fe-Al intermetallic compounds.

Examples of Fe-Al intermetallic compound include Fe₃Al, FeAl, FeAl₂, Fe₂Al₅, FeAl₃ and the like. Among these, it is considered that 50:50 to 15:85 of a mass ratio of Fe:Al is effective since the melting point is close to that of copper and an excellent adhesion film suitable for the counterpart material can be formed. The Fe-Al intermetallic compound may be used alone or in combination of two or more kinds thereof.

A particle diameter d50 of the Fe-Al intermetallic compound is not particularly limited as long as the particle diameter is a size which is normally used, but is preferably from 1 µm to 500 µm, and more preferably from 5 µm to 100 µm. It is preferable that the particle diameter is within the range, since the counterpart material attack is small.

A content of the Fe-Al intermetallic compound is preferably from 0.5% by mass to 7% by mass, and more preferably from 1% by mass to 5% by mass in the friction material. It is preferable that the content is 0.5% by mass or more from the viewpoint of reduction of the counterpart material attack, and it is preferable that the content is 7% by mass or less from the viewpoint of the stabilization of friction properties in a wet state.

In addition, it is preferable to use both of the aluminum and the Fe-Al intermetallic compound from the viewpoint of the improvement of a wetting effect when braking is performed at a high speed and the reduction of the counterpart material attack. The total amount of the aluminum and the Fe-Al intermetallic compound when both are used is preferably from 1% by mass to 10% by mass with respect to the friction material from the viewpoint of stabilized friction properties.

### (Steel Fibers)

In the present invention, the steel fibers are mainly used as the metal fibers in the fiber base material. By incorporating the steel fibers into the friction material, the braking at a high speed is excellently performed.

It is preferable that the shape of the steel fibers has a fiber diameter of 50 µm to 200 µm, a length of 1 mm to 30 mm, and an aspect ratio of 3 or more from the viewpoint of both the reduction of the counterpart material attack and the stabilization of the friction properties.

A content of the steel fibers is preferably from 5% by mass to 40% by mass in the friction material from the viewpoint of both the counterpart material attack and the coefficient (effectiveness) of friction, and is more preferably from 10% by mass to 30% by mass.

As described above, since the friction material in the present invention contains: at least any one of the above-described aluminum and the Fe-Al intermetallic compound; the alumina; the chromite; and the steel fibers, stability of the coefficient of friction in a wet state (wetting effect) is excellent, and the counterpart material attack is excellent in the friction material.

By using the materials in combination, a substitution effect of forming the adhesion film for expected malleability of copper contained in the friction material in the related art can be achieved.

It is preferable that, in the friction material in the present invention, magnesia (MgO) is further used in combination. Since magnesia is a mild abrasive as compared to alumina or chromite, it is possible to achieve more preferable counterpart material attack of the friction material.

A particle diameter d50 of the magnesia is not particularly limited as long as the particle diameter is a size which is normally used, but is preferably from 1 µm to 100 µm from the viewpoint of formability when producing the friction material and the wear properties with respect to the counterpart material.

A content of magnesia is preferably from 0.5% by mass to 8% by mass in the friction material from the viewpoint of the counterpart material attack.

### [Other Friction Adjusting Materials]

### (Filler)

As a friction adjusting material to be used in addition to the above-described friction adjusting materials, it is possible to use organic filler or inorganic filler, which are generally used.

Examples of the organic filler include various kinds of rubber (for example, an acrylonitrile-butadiene rubber (NBR), a styrene butadiene rubber (SBR), and a butadiene rubber (BR)), tire tread, organic substance dust (for example, rubber dust and cashew dust), polytetrafluoroethylene (PTFE) and the like.

Examples of the inorganic filler include a powder of a metal such as tin or zinc, vermiculite, mica, calcium hydroxide, barium sulfate, calcium carbonate, natural graphite, scale-shaped graphite, elastic graphite, expanded graphite, graphite cokes, tin sulfide, plate-shaped potassium titanate, scale-shaped potassium titanate, or powder-shaped potassium titanate, lithium potassium titanate, or magnesium potassium titanate.

A content of the organic filler is preferably from 1% by mass to 15% by mass in the friction material. A content of the inorganic filler is preferably from 1% by mass to 70% by mass in the friction material.

In addition, the total amount of the filler is preferably from 1% by mass to 75% by mass in the friction material.

### (Abrasive)

The friction material in the present invention may contain an abrasive other than the above-described alumina, chromite, and magnesia (hereinafter, it may be referred to as "other abrasive").

The mild abrasive is obtained as the particle diameter of the abrasive decreases, but when the particle diameter is too small, the role of the abrasive is not achieved. Meanwhile, the coefficient of friction is improved by grinding the counterpart material as the particles diameter increases, but when the particle diameter is too large, the counterpart material is excessively grinded. It is necessary to adjust the particle diameter or the content depending on the kind, shape, or Mohs hardness of the abrasive.

When an abrasive having Mohs hardness of 7 or more is used as the other abrasive, a high coefficient of friction which is required for performing the braking at a high speed and a high load can be obtained.

Examples of the abrasive having Mohs hardness of 7 or more include silica, silicon carbide, mullite, stabilized zirconia, or zirconium silicate, and they have a role of grinding the counterpart material and improving the coefficient of friction.

Among these, it is preferable to use at least one of the stabilized zirconia and the zirconium silicate as the abrasive from the viewpoint of obtaining a high coefficient of friction which is required for performing the braking at a high speed and a high load, and it is more preferable to use at least any one of the stabilized zirconia and the zirconium silicate. The abrasives can be used alone or in combination of two or more kinds thereof.

In particular, in order to obtain high coefficient of friction which is required for performing the braking at a high speed and a high load, it is preferable to contain the stabilized zirconia of a thermally stable cubic crystal system.

The stabilized zirconia is prepared, for example, by adding several % of stabilizer such as calcia (CaO), yttria (Y₂O₃), or magnesia (MgO) to baddeleyite which is natural zirconia, followed by performing electromelting and stabilizing processing. By the treatments, zirconia of a monoclinic system becomes zirconia of a cubic crystal system, phase transition does not occur, and a state thereof is thermally stabilized.

A stabilization ratio, that is, a ratio of the cubic crystal system among the zirconia crystals may be arbitrary since the ratio does not influence stabilization of the initial coefficient of friction, but in a case of partially-stabilized zirconia having a stabilization ratio of less than 50%, it is conventional that a wear amount of a disk rotor which is the counterpart material remarkably increases, and the wear amount of the counterpart material increases according to hardness of the counterpart material. Accordingly, it is desirable that the stabilization ratio is 50% or more. However, when the wear amount of the counterpart material is not large enough, the stabilization may not be hindered even when the stabilization ratio is less than 50%.

In addition, an adding amount of stabilizer which is necessary for obtaining 100% stabilized zirconia configured only of the cubic crystal system in which the stabilizer is soluted is, for example, as follows. Here, the following adding amount is an amount with respect to the natural zirconia.
Calcia (CaO): 4% by mass to 8% by mass
Yttria (Y₂O₃): 6% by mass to 10% by mass
Magnesia (MgO): 4% by mass to 8% by mass

In the present invention, a content of the abrasive having Mohs hardness of 7 or more is preferably from 1% by mass to 20% by mass, and more preferably from 3% by mass to 10% by mass with respect to the friction material. When the content is within the range, it is possible to improve the coefficient of friction when performing the braking at a high speed and a high load, and to reduce the counterpart material attack.

In the present invention, an average particle diameter of the abrasive having Mohs hardness of 7 or more is preferably from 3 µm to 20 µm. When the average particle diameter is within the range, it is possible to improve the coefficient of friction when performing the braking at a high speed and a high load, and to reduce the counterpart material attack. In addition, in the present invention, as the average particle diameter, a value of the particle diameter d50 which is measured by the laser diffraction particle diameter distribution method is used.

It is preferable to use the abrasive having Mohs hardness of less than 7 as the other abrasive from the viewpoint of a balance between the coefficient (effectiveness) of friction and the counterpart material attack. Examples of the other abrasives having Mohs hardness of less than 7 include triiron tetraoxide, magnesia, chromite and the like.

In addition, Mohs hardness of alumina is 7 or more, and Mohs hardness of magnesia and chromite is less than 7.

In the present invention, in general, a content of the entire abrasive containing alumina, chromite, magnesia, and the other abrasives is preferably from 1% by mass to 30% by mass, and is more preferably from 10% by mass to 30% by mass in the friction material.

### [Other Fiber Base Materials]

Examples of the other fiber base materials contained in the friction material in the present invention include organic fibers, inorganic fibers, and metal fibers except for the steel fibers and aluminum fibers.

### (Organic Fibers and Inorganic Fibers)

Examples of the organic fibers include aromatic polyamide (aramid) fibers, cellulose fibers, polyacrylic fibers and the like. Among these, the aramid fibers are preferable from the viewpoint of matrix strength of the friction material.

Examples of the inorganic fibers include potassium titanate fibers, biosoluble inorganic fibers, glass fibers, carbon fibers, rock wool and the like.

### (Other Metal Fibers)

Examples of the other metal fibers include zinc, tin, a tin alloy, stainless steel and the like.

The above-described other fiber base materials may be used alone or in combination of two or more kinds thereof. In addition, a content of the entire fiber base material including the steel fibers and aluminum fibers is generally from 1% by mass to 40% by mass, and is preferably from 5% by mass to 30% by mass in the friction material.

### [Binder]

The friction material in the present invention may contain a binder which is normally used.

Examples of the binder include a thermosetting resin such as a phenol resin modified with elastomer, a phenol resin (including a straight phenol resin and various modified phenol resins), a melamine resin, an epoxy resin, and a polyimide resin. In addition, examples of the various modified phenol resins include a phenol resin modified with a hydrocarbon resin, a phenol resin modified with epoxy and the like.

In the phenol resin modified with elastomer, an elastomer which modifies the phenol resin and imparts plasticity to the phenol resin may be employed, and examples thereof include cross-linked natural rubber and synthesized rubber.

As the elastomer which modifies the phenol resin, acrylic rubber, silicone rubber or the like is preferably used. The phenol resin modified with elastomer can be used alone or in combination of two or more kinds thereof.

A content of the phenol resin modified with elastomer is preferably from 5% by mass to 20% by mass, and more preferably from 5% by mass to 15% by mass in the entire friction material. When the content is within this range, it is possible to stabilize the coefficient of friction at a low temperature even without providing the adhesion film derived from a metal component.

In addition, in the present invention, a content of the binder is generally from 5% by mass to 20% by mass, and is preferably from 5% by mass to 15% by mass in the entire friction material.

### [Producing Method of Friction Material]

The friction material in the present invention can be produced by mixing each of the above-described components, by preforming the mixture according to a general producing method, and performing thermoforming, heating, grinding and the like.

A brake pad including the friction material can be produced according to the following steps (1) to (4).
(1) A process of forming a steel plate (pressure plate) into a predetermined shape by sheet-metal pressing.
(2) A process of subjecting the steel plate formed into the predetermined shape to degreasing treatment, chemical conversion treatment, and primer treatment, and coating an adhesive thereon.
(3) A process of subjecting the pressure plate after the above-described processes (1) and (2) and the preformed body of the friction material to thermal forming at a predetermined temperature and pressure in the process of thermoforming, thereby fixing both members to be integrated with each other.
(4) A process of performing post-curing after the process (3), and finally performing finishing treatment such as grinding, scorching, and painting.

### Examples

Hereinafter, the present invention is specifically described below by examples. However, the present invention is not limited to only these examples.

### <Examples 1 to 22, and Comparative Examples 1 to 4>

Mixing materials of the friction material were mixed uniformly by a mixer according to the formulation (% by mass) shown in Table 1, and a friction material mixture was obtained. Next, the friction material mixture was preformed at room temperature under a pressure of 20 MPa for 10 seconds. The preformed article after forming was added to a thermoforming mold, the steel plate (pressure plate: P/P) which has been coated with an adhesive in advance was laminated thereto, and thermocompression forming was performed at a temperature of 150°C under a forming surface pressure of 40 MPa for 5 minutes. By subjecting the thermocompression formed body to a heat treatment at a temperature of 220°C for 3 hours, and grinding to have a predetermined thickness and painting, a friction pad including the friction material according to Examples 1 to 22 and Comparative Examples 1 to 4 was obtained.

In the Examples and Comparative Examples, chromite having a composition of (Fe, Mg)O·(Cr, Al)₂O₃, and a particle diameter d50 of 12 µm was used.

An Fe-Al intermetallic compound which was a mixture of three compounds, Fe₃Al, FeAl₂, and Fe₂Al₅, and was a crushed article having Fe:Al=50:50 (mass ratio), was used, and the particle diameter d50 thereof was 40 µm. In addition, "ferroaluminum powder" in Table 1 represents the crushed article.

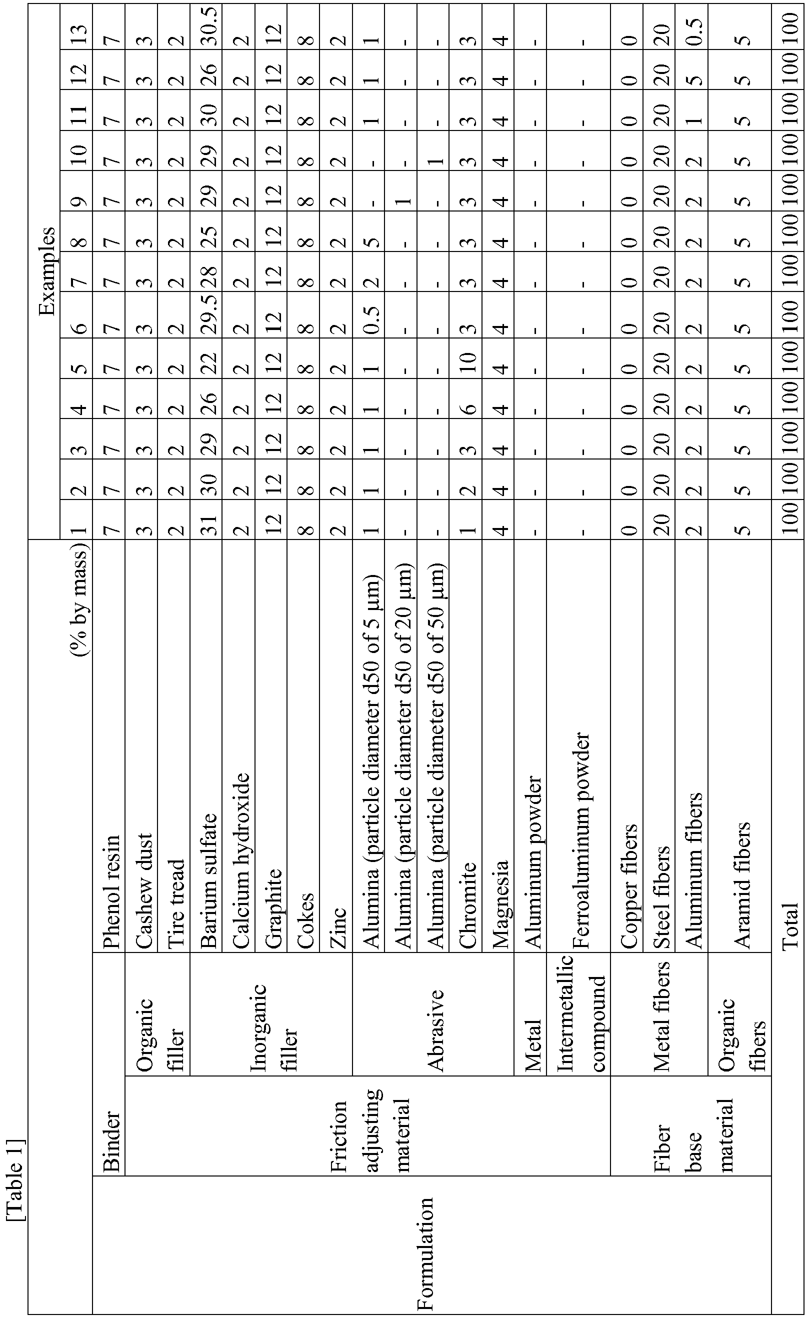

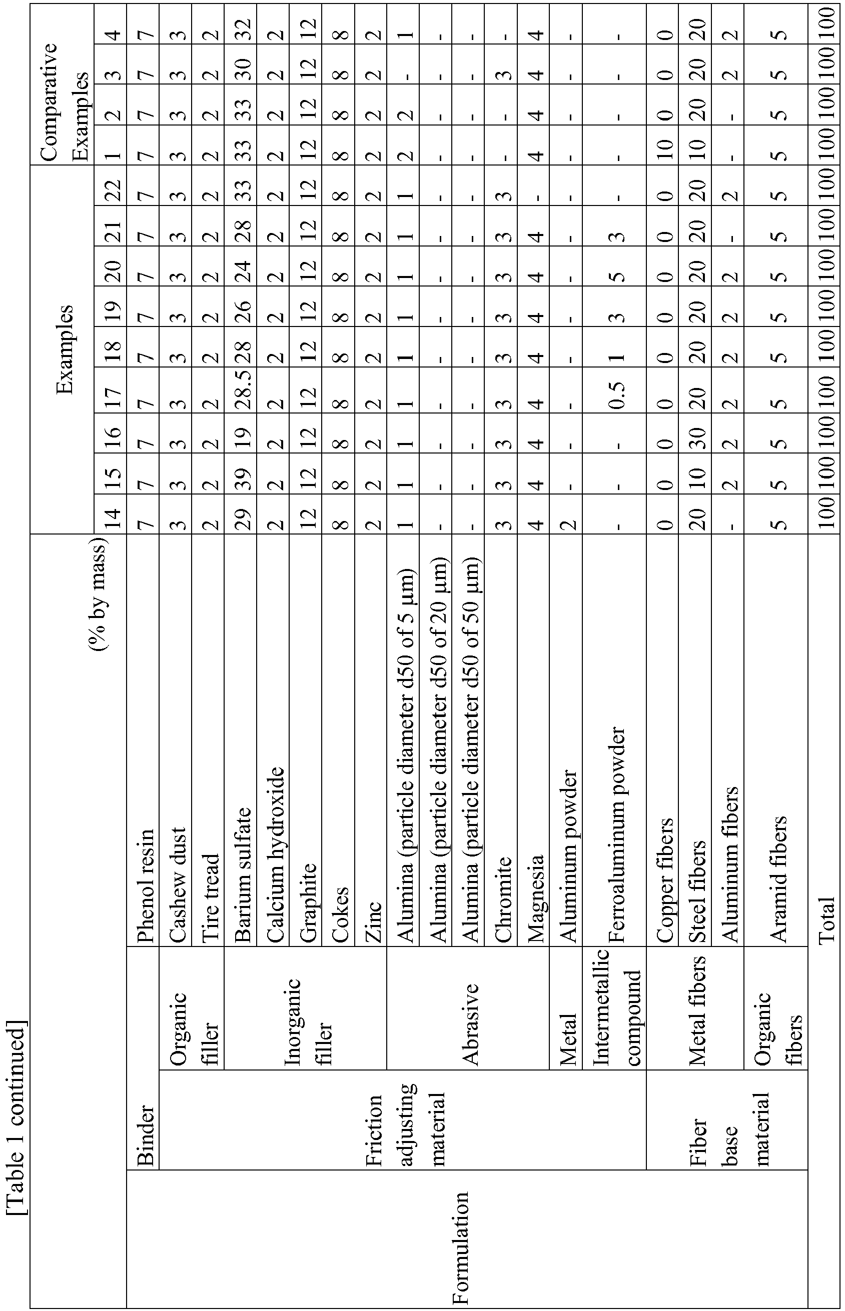

An evaluation method of the obtained friction pad is described in the following.

### (1) Friction properties

Evaluation of friction properties was performed in accordance with JASO C406 (general performance test). In the evaluation of the friction properties, second effect tests were performed respectively under a dry condition (dried state) and a wet condition by using a full-sized dynamometer, and then, a coefficient of friction µ was determined, and a variation rate of the coefficient of friction was determined as a change rate of braking under the wet condition assuming that the coefficient of friction in a dried state was considered as 100%. The test conditions were as follows: the initial speed of braking was 100 km/h and deceleration was 5.88 m/s².

In addition, the evaluation under the wet condition was performed under the water applying condition where the burnishing was performed under a dried stated, and then, water spraying was started when a temperature of a rotor was cooled down to 50°C, and the water was continuously sprayed at an amount of water of 2 L/min until the test was finished.

It is generally recognized that the higher coefficient of friction µ tends to be preferable, and the higher coefficient of friction µ is preferable in the second effect test. However, in consideration of a balance with the counterpart material attack, the coefficient of friction is appropriately adjusted to be a desirable coefficient of friction.

### (2) Counterpart Material Attack

The wear amount of the disk rotor (counterpart material) was evaluated after performing the evaluation of the friction properties in accordance with JASO C406:2000 (full-sized dynamometer test method). In addition, a disk rotor equivalent to FC200 was used.

The evaluation result of the above-described (1) and (2) is shown in Tables 2 and 3.

In the Tables, in the evaluation of the wetting effect (change in braking), the case where the change rate of braking is less than 10% is represented by "O", the case where the change rate of braking is 10% or more and less than 20% is represented by "Δ", and the case where the change rate of braking is 20% or more is represented by "X".

Regarding the counterpart material attack, the case where the wear amount of the rotor of the counterpart material is 15 µm or less is represented by "O", the case where the wear amount of the rotor of the counterpart material is more than 15 µm and less than 20 µm is represented by "Δ", and the case where the wear amount of the rotor of the counterpart material is 20 µm or more is represented by "X".

**[Table 2]**

| | | | | | Examples | | | | | | | | | | | | | | |
|---|---|---|---|---|---|---|---|---|---|---|---|---|---|---|---|---|---|---|---|
| | | | | | 1 | 2 | 3 | 4 | 5 | 6 | 7 | 8 | 9 | 10 | 11 | 12 | 13 | 14 | 15 |
| Friction properties | Coefficient of friction µ under a wet condition | | 100 km/h | Deceleration 5.88 [m/s²] | 0.35 | 0.38 | 0.40 | 0.41 | 0.41 | 0.38 | 0.41 | 0.42 | 0.41 | 0.43 | 0.40 | 0.39 | 0.40 | 0.39 | 0.39 |
| | Coefficient of friction µ under a dry condition | | 100 km/h | Deceleration 5.88 [m/s²] | 0.38 | 0.40 | 0.41 | 0.42 | 0.42 | 0.39 | 0.40 | 0.41 | 0.41 | 0.42 | 0.41 | 0.41 | 0.40 | 0.42 | 0.42 |
| JASO-C406 Extraction of a part for second effect | Change rate of braking *Change rate when a change rate in a dried state is considered as 100% | | 100 km/h | Deceleration 5.88 [m/s²] | 7.9 | 5.0 | 2.4 | 2.4 | 2.4 | 2.6 | 2.5 | 2.4 | 0.0 | 2.4 | 2.4 | 4.9 | 0.0 | 7.1 | 7.1 |
| Counterpart material attack [µm] JASO-C406 | | | | | 15 | 12 | 11 | 13 | 16 | 11 | 14 | 19 | 15 | 18 | 14 | 10 | 16 | 12 | 12 |
| Evaluation | | Wetting effect (change in braking) | | | ○ | ○ | ○ | ○ | ○ | ○ | ○ | ○ | ○ | ○ | ○ | ○ | ○ | ○ | ○ |
| | | Counterpart material attack | | | ○ | ○ | ○ | ○ | Δ | ○ | ○ | Δ | ○ | Δ | ○ | ○ | Δ | ○ | ○ |

**[Table 3]**

| | | | | | Examples | | | | | | | Comparative Examples | | | |
|---|---|---|---|---|---|---|---|---|---|---|---|---|---|---|---|
| | | | | | 16 | 17 | 18 | 19 | 20 | 21 | 22 | 1 | 2 | 3 | 4 |
| Friction properties | Coefficient of friction µ under a wet condition | | 100 km/h | Deceleration 5.88 [m/s²] | 0.39 | 0.40 | 0.40 | 0.40 | 0.39 | 0.41 | 0.39 | 0.42 | 0.33 | 0.29 | 0.30 |
| | Coefficient of friction µ under a dry condition | | 100 km/h | Deceleration 5.88 [m/s²] | 0.42 | 0.41 | 0.41 | 0.40 | 0.38 | 0.43 | 0.41 | 0.44 | 0.40 | 0.39 | 0.39 |
| JASO-C406 Extraction of a part for second effect | Change rate of braking *Change rate when a change rate in a dried state is considered as 100% | | 100 km/h | Deceleration 5.88 [m/s²] | 7.1 | 2.4 | 2.4 | 0.0 | 2.6 | 4.7 | 4.9 | 4.5 | 17.5 | 25.6 | 23.1 |
| Counterpart material attack [µm] JASO-C406 | | | | | 12 | 11 | 11 | 10 | 9 | 12 | 19 | 12 | 23 | 17 | 18 |
| Evaluation | | Wetting effect (change in braking) | | | ○ | ○ | ○ | ○ | ○ | ○ | ○ | ○ | Δ | X | X |
| | | Counterpart material attack | | | ○ | ○ | ○ | ○ | ○ | ○ | Δ | ○ | X | Δ | Δ |

A friction pad in Comparative Example 1 contained copper fibers, and the formulation thereof corresponds to the formulation which is generally used in the related art as a friction material of a non-asbestos organic (NAO) material.

In addition, the case where the counterpart material attack of the friction pad is 15 µm or less is evaluated as "O" in the Table, but it can be said that the case where the counterpart material attack is less than 20 µm is practical. For this reason, even when the counterpart material attack is evaluated as "Δ" in the Table, it can be said that the friction pad has sufficiently practical performance.

In contrast to this, when the copper component is removed from the friction material included in the friction pad in the related art, as shown in Comparative Example 2, the difference (change rate of braking) between the coefficient of friction under the wet condition and the coefficient of friction under the dry condition is large, and it is found that the friction properties are not stable. In addition, when the content of the steel fibers is increased instead of the use of the copper fibers and the amount of metal fibers is made to be constant, the wear amount of the counterpart material increases tremendously, and the counterpart material attack increases.

However, even when the copper component is not contained, it is found that the friction material having the small change rate of braking, the stable friction properties, and the excellent counterpart material attack can be obtained, and performance equivalent to or greater than that of the related art can be achieved by the configuration of the present invention (Examples 1 to 22).

In the friction material which does not contain the copper component, when aluminum, alumina, and steel fibers were contained, but the content of chromite was 0% by mass (chromite was not contained), the change rate of braking exceeded 20%, and further, the counterpart material attack was 18 µm, and the performance is remarkably deteriorated (Comparative Example 4).

From the result of Examples 1 to 5, it is found that the coefficient of friction is stabilized in a wet state by containing the chromite, and stable counterpart material attack is obtained by further adjusting the content of chromite without excessively grinding the counterpart material.

In the friction material in the present invention, alumina also contributes to stabilization of the friction properties.

When only 0.5% by mass of alumina having a particle diameter d50 of 5 µm is contained, a friction material excellent in both of the change rate of braking and the counterpart material attack is obtained (Example 6). In contrast to this, when alumina was not contained, the change rate of braking exceeded 25%, and the friction properties was extremely unstable (Comparative Example 3).

The aluminum contained in the friction material in the present invention is used from the viewpoint of prevention of excessive wear of the counterpart material and film-forming property on the friction surface, but it was found that the shape thereof is not limited to the shape of fibers, and even in a case of a shape of powder, similar effects can be obtained (Example 14). In addition, it was found that an excellent result can be obtained by using the Fe-Al intermetallic compound instead of aluminum (Example 21). This may be because it is possible to form an excellent adhesion film on the counterpart material.

Furthermore, by using both the aluminum and the Fe-Al intermetallic compound in combination, even when performing braking at a high speed which is a measurement condition, it is possible to obtain more stabilized friction properties, and to reduce the counterpart material attack (Examples 17 to 20).

As described above, it was found that, even in a case of the friction material which does not contain the copper component, it is possible to obtain a friction material in which the coefficient of friction is stabilized by improving the wetting effect and the counterpart material attack is excellent even when performing braking under conditions of a high temperature and a high speed such that the initial speed of braking is 100 km/h and the deceleration is 5.88 m/s², by containing: at least any one of aluminum and an Fe-Al intermetallic compound; alumina; chromite; and steel fibers.

### Industrial Applicability

The friction material in the present invention is a friction material which has a low environmental load since a copper component is not contained therein. In addition, although the copper component is not contained, by containing at least any one of aluminum and an Fe-Al intermetallic compound; alumina; chromite; and steel fibers, the friction material having stabilized friction properties in a wet state and a low counterpart material attack, which are equivalent to or greater than those in the related art, is obtained. Therefore, the friction material in the present invention is useful particularly for a brake pad, a brake lining, or a clutch, which are used in automobiles, railway vehicles, and industrial machines, and the technical significance thereof is extremely high.

## Claims

1. A friction material, which comprises a binder, a friction adjusting material and a fiber base material, and does not contain a copper component,
**characterized in that** the friction material comprises at least any one of aluminum and an Fe-Al intermetallic compound; alumina; chromite; and a steel fiber.

2. The friction material according to claim 1, wherein the aluminum is at least any one of an aluminum fiber and an aluminum powder.

3. The friction material according to claim 1 or 2, wherein the Fe-Al intermetallic compound is at least one compound selected from the group consisting of Fe₃Al, FeAl, FeAl₂, Fe₂Al₅ and FeAl₃.

4. The friction material according to any one of claims 1 to 3, wherein a content of the steel fiber is from 10% by mass to 30% by mass.

## Patentansprüche

1. Reibmaterial, welches ein Bindemittel, ein Reibungsanpassungsmaterial und ein Faser-Basismaterial umfasst und keinen Kupferbestandteil enthält,
**dadurch gekennzeichnet, dass** das Reibmaterial mindestens irgendeines aus Aluminium und einer Fe-Al-Intermetallverbindung; Aluminiumoxid; Chromit; und einer Stahlfaser umfasst.

2. Reibmaterial gemäß Anspruch 1, wobei es sich bei dem Aluminium um mindestens irgendeines aus einer Aluminiumfaser und einem Aluminiumpulver handelt.

3. Reibmaterial gemäß Anspruch 1 oder 2, wobei es sich bei der Fe-Al-Intermetallverbindung um mindestens eine Verbindung handelt, ausgewählt aus der Gruppe bestehend aus Fe₃Al, FeAl, FeAl₂, Fe₂Al₅ und FeAl₃.

4. Reibmaterial gemäß einem der Ansprüche 1 bis 3, wobei ein Gehalt der Stahlfaser von 10 Massen-% bis 30 Massen-% beträgt.

## Revendications

1. Matériau de frottement, qui comprend un liant, un matériau d'ajustement de frottement et un matériau à base de fibre, et qui ne contient pas de composant en cuivre,
**caractérisé en ce que** le matériau de frottement comprend au moins l'un quelconque parmi de l'aluminium et un composé intermétallique Fe-Al ; de l'alumine ; de la chromite ; et une fibre d'acier.

2. Matériau de frottement selon la revendication 1, dans lequel l'aluminium est au moins l'un quelconque parmi une fibre d'aluminium et une poudre d'aluminium.

3. Matériau de frottement selon la revendication 1 ou 2, dans lequel le composé intermétallique Fe-Al est au moins un composé choisi parmi le groupe constitué de Fe₃Al, FeAl, FeAl₂, Fe₂Al₅ et FeAl₃.

4. Matériau de frottement selon l'une quelconque des revendications 1 à 3, dans lequel une teneur en fibre d'acier est comprise entre 10 % en masse à 30 % en masse.
